# EUROPEAN PATENT SPECIFICATION

(11) **EP 0 767 113 B1**
(45) Date of publication and mention of the grant of the patent: **03.07.2002**
(21) Application number: 96307193.1
(22) Date of filing: 01.10.1996
(51) Int. Cl.: B65G 1/04, B65G 1/137

(54) **Picking system**
Kommissioniersystem
Système de préparation de commandes

(30) Priority: 02.10.1995 FI 954688
(43) Date of publication of application: 09.04.1997
(73) Proprietor: CIMCORP OY, SF-28400 Ulvila (FI)
(72) Inventor: Peltomäki, Tero, 28450 Vanha-Ulvila (FI); Vesa, Markku, 28600 Pori (FI)
(74) Representative: Newby, Martin John

(56) References cited:
- DE-A- 2 629 718
- US-A- 2 701 065

## Description

This invention relates to a robot system according to the preamble of claim 1 and to a method according to claim 7.

In the delivery departments of certain production plants, sets of products are gathered for delivery according to customer orders. Manual gathering is slow, because a single customer order may comprise a great number of different products. In automated gathering, each product has its own feed line from which products are taken according to customer orders. Products are collected only at the end of these feed lines. Furthermore, the feed line system is expensive, complicated and takes up a great deal of space. Robot systems may be installed to speed up the collection process. However, since a customer order normally comprises a great number of different products, the transport distances and thus also the working time of the robot are excessively long.

Arranging goods units in piles or vertical stacks and picking selected items from the stacks is known from US-A-2701065 which shows a wire based container lift system. The system includes two separate lifting devices which enable containers to be taken from a lower position in a container stack. The system is intended for car parking and refers only to obtaining access to single containers. FI-922028 shows a system for storing and transportation of boxes and stacks of boxes. However the system does not make it possible to form predetermined box combinations by picking boxes from selected stacks. The robot handling system disclosed by DE-A-27 29 718 presents a load receiving tower movable over a storage area.

An object of the invention is to provide a robot arrangement to speed up the picking and delivery of goods. This is achieved by using a special robot gripping device and by reducing the total transport distances. Storeroom space can also be reduced by eliminating void spaces, such as passageways and conveyor aisles.

According to one aspect of the present invention there is provided a robot system as claimed in the ensuing claim 1.

The robot system is useful for handling goods stored in boxes or the like stacked one upon another in vertical stacks on a storeroom floor. Conveniently the load compartment of the gripping device of the system robot opens upwards. By controlling the vertical movements of the robot it is possible to pick one or several boxlike goods units from, or to deliver one or several boxlike goods units to, the top of a vertical stack of the boxlike goods units. The amount of goods units picked/delivered by the robot may be freely selected and varied without any change in the structure of the gripping device. Thus, the robot may pick from a number of stacks the amount of boxes specified in a customer order without any intermediate transports from each stack back to the delivery site. Hence, the time used for robot movements is short and the function is effective.

The robot may be a bridge or portal robot comprising a bridge moving over the entire working area. In this case a robot unit, such as a trolley, carrying the gripping device, is movable along the bridge. This makes it possible to utilize the floor area for storing in a most effective way because the robot operates from above, and thus no passageways or the like void spaces are required in the storage area.

The robot moves goods units to desired positions. Normally, the robot unloads, at an unloading station, a stack of goods units it has formed by picking selected items from one or more vertical stacks of goods units in the working area.

The gripping device of the robot preferably comprises a vertically movable tower-like frame, which may be freely moved from above over any desired stack of goods units so that the stack is enclosed in the inner space of the frame. The stack may also partly extend above the top of the frame. The frame preferably provides the transported stack with lateral support, so that the robot may accelerate and decelerate relatively swiftly, thereby speeding up the transport of the goods units. The gripping device should be vertically movable upwards to such a level that it may pass horizontally over even the highest stack of goods units stacked on the floor of the working area.

The gripping device has, at its lower end, gripping fingers or the like, by means of which the lowest goods unit in the portion of a stack to be picked can be gripped. It is recommended that each goods unit is provided with projections, apertures or the like support points, to enable the gripping fingers to easily obtain a reliable hold.

The gripping device of the robot is preferably so dimensioned, that it may, in one operation, lift and transport a greater number of goods units stacked one on top of the other than are in the highest stack of goods units in the storeroom or working area. It is then possible to transport, in one operation, a greater number of goods units than is possible to keep stacked in the storeroom. This increases the efficiency of the robot system and reduces the transport distances.

According to another aspect of the invention there is provided a method as claimed in the ensuing claim 7. This operating method minimizes the total transport distances of the robot between the stacks of goods units and the unloading site. If the robot operates in a freezing storeroom, picking and unloading of goods units may be totally controlled from the outside of the storeroom, which is of advantage from the viewpoint of worker protection.

If each vertical stack contains only one sort of goods unit, the control of the robot system is relatively simple, which improves reliability.

Sometimes, for example close to the latest consumption date, or "sell by date", of goods, it is necessary to change the picking sequence of the goods units. Then the robot is controlled to move desired amounts of goods from certain stacks or piles to other storing places, for example to adjacent empty storage positions.

An embodiment of the invention will now be described, by way of example only, with particular reference to the accompanying drawings, in which:
Figure 1 schematically shows a top view of a robot system according to the invention;
Figure 2 is a schematic section taken on the line II-II or Figure 1; and
Figure 3 schematically shows a side view of a gripping device according to the invention.

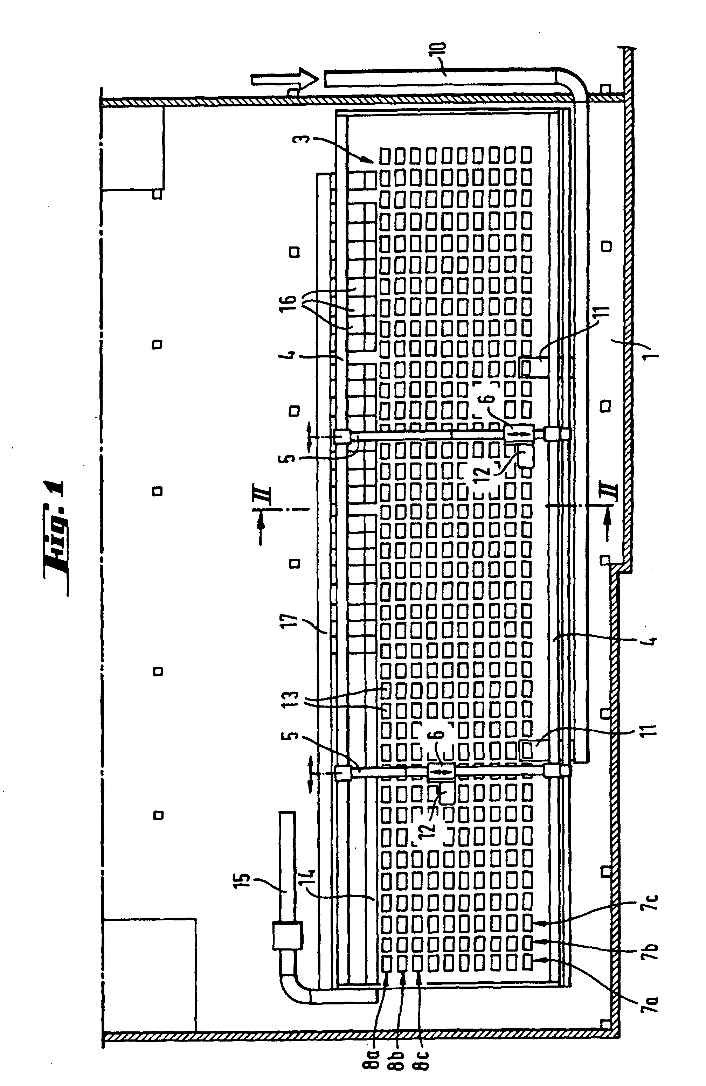

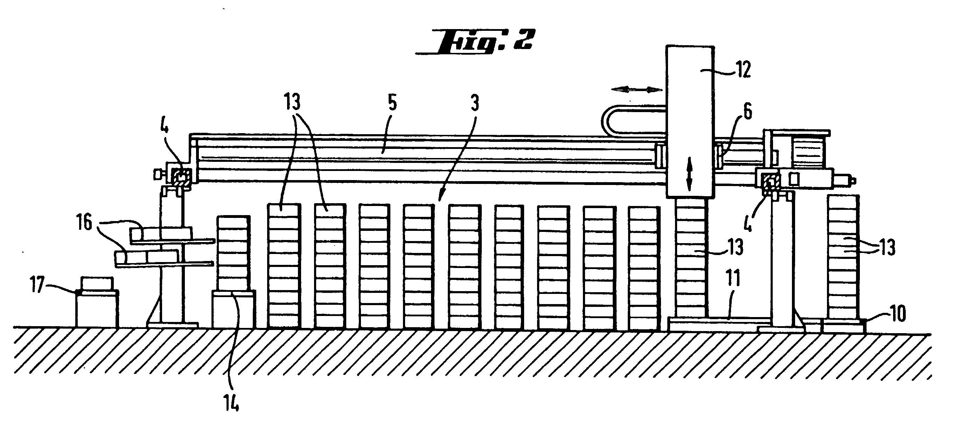

Figures 1 and 2 show a great number of goods units in the form of boxes arranged in vertical piles or stacks in a storage area 3 of a storeroom 1. Horizontal rails 4 extend on both sides of the storage area 3, preferably at a level well above the tops of the vertical stacks. One or several robot bridges 5 span between, and are movable along, the rails 4. Each robot bridge has a trolley 6 moving along the bridge. In the storage area 3 there are storage sites in transverse rows 7a, 7b, 7c, etc. in the moving direction of the trolleys 6 and in longitudinal rows 8a, 8b, 8c, etc. in the moving direction of the bridges 5.

A transport line, such as a belt conveyer 10, brings goods units to the storeroom 1. Other belt conveyors 11 move the goods units to the working area of a robot unit 12 mounted on the trolley 6 of the robot. The robot unit 12 lifts one or several boxes 13 from the belt conveyor 11 and moves the boxes to the desired position of the storage area 3, either to an empty storage position or on top of a vertical stack of boxes already in the storage area. A complete vertical stack of boxes typically comprises up to ten or even more boxes stacked one on top of each other. Since the robot moves over the working area and moves vertically to access the stacks of boxes, there is no need for the robot to move between the stacks. Accordingly the box stacks are conveniently positioned close to one another for obtaining the most effective use of the storage room and for minimizing transport distances. In practice, the smallest distance between adjacent stacks is about 5 cm. This necessitates the use of a flat and level storeroom floor, boxes fitting precisely one on another and a precise, accurately positionable robot system. Additionally, the gripping device of the robot has to be slim, being only slightly larger than the outer dimensions of the stack of boxes.

The robot is automatically controlled by a control system and includes an arrangement which informs the control system of the positions of the moving parts of the robot. The control system is preprogrammed with certain limit values, such as the maximum amount of boxes allowed to be in a stack, the maximum allowed weight of a stack, storage times of wasting, ageing or ripening goods, etc..

Goods units may additionally be transported within the storage area 3. For instance, it is possible to move the lowest box or boxes first out from the storage area or to retain the uppermost boxes for later delivery. Because data and positions relating to all goods are available in the control system in real time, the robot operation is precise and flexible.

If it is desired to pick goods from the storage area 3, the robot unit 12 is programmed to move along the shortest movement path from one storage position to another picking boxes from the upper ends of selected vertical stacks and moving them to a conveyor 14 or to any other unloading site. The final transport of the goods units out from the storeroom 1 is performed by a conveyor 15. There are also conveyor lines 16 and 17 for possible manual sorting of goods from one box to another.

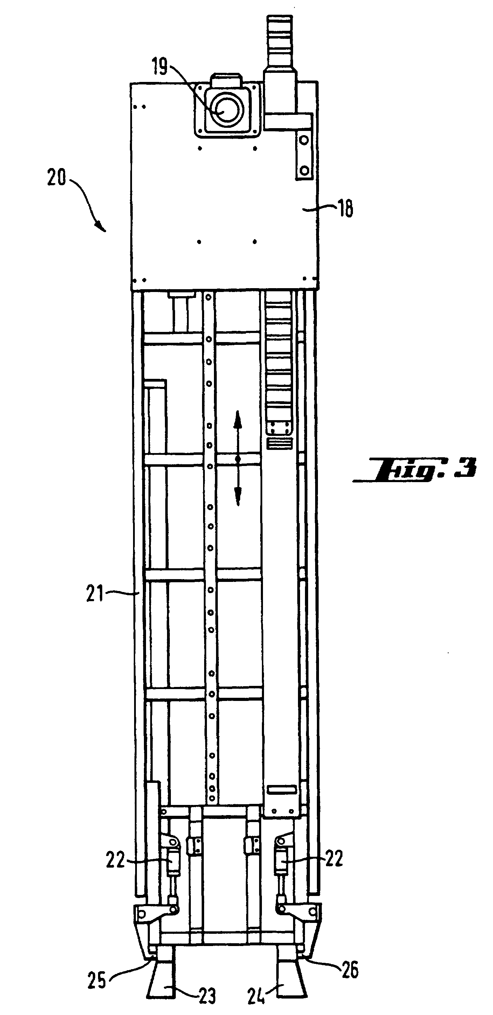

Figure 3 shows the gripping device 20 of the robot unit 12 which has a base plate 18 attached to the trolley 6. The base plate carries a self-supporting structure in the form of a frame 21 open at its lower end. The frame 21 is movable vertically by means of a motor 19 attached to the base plate 18. The inner load space or load compartment of the frame 21 is at least so high as to enclose therein the highest possible stack of goods units stacked in the storage area 3. The upper end of the frame 21 may also be open, which makes it possible to transport a stack of goods units that extends higher than the frame. At its bottom end the frame 21 has stack corner guide members 23 and 24.

The robot unit 12 places, from above, the gripping device 20 at the position of a selected box stack, so that the stack is received between the corner guide members 23 and 24. Then the frame 21 is lowered by the motor 19 to such a level that a pair of gripping fingers 25 and 26 controlling power cylinders 22 so as to grip and get hold of a selected box in the selected stack. When the frame 21 and the gripped box is subsequently moved upwards, the gripped box and all the boxes in the stack above it, which together constitute a selected portion or a first set of boxes of the box stack, are carried in the frame and may be moved to another position. If the load carried by the frame 21 is placed on top of another stack, one may, by loosening the grip on the previously gripped box and by lowering the frame to a new picking position, pick from said other box stack a selected amount, or second set, of boxes below the boxes already in the frame. In this manner the outgoing stack is formed as a desired combination of the first and second sets of boxes. If desired further stacks can be visited by the the robot unit 12 so that further boxes are added to the load carried by the frame. Finally, the robot unit 12 moves the formed box stack to an unloading area, such as the conveyor 14.

The invention is not to be considered as being limited to the embodiment illustrated since several variations thereof are feasible including variations which have features equivalent to features in any of the following claims.

## Claims

1. A robot system comprising a robot (12) movable over a working area for forming and handling multi-unit batches of goods units picked from piled goods units arranged in vertical stacks within the working area, said robot (12) having a vertically movable gripping device (20) enabling the robot (12) to pick goods units from, and/or to unload such units onto, the tops of selected stacks, **characterised in that** the gripping device comprises a vertically movable tower-like load receiving device (21) defining a load space for receiving stacked goods units and gripping means (22-26) at the lower end of the load receiving device, the load receiving device being dimensioned in the vertical direction to receive and enclose a plurality of goods units carried generally vertically on top of an undermost goods unit gripped by said gripping means, thereby enabling the gripping device (20, by control of its vertical movements, selectively to pick at least one goods unit from, or selectively to deliver at least one goods unit to, a vertical stack of goods units so that the number and composition of goods units in a batch of goods units picked and delivered by the robot (12) to an unloading site may be freely selected and varied according to a preset command.

2. A robot system according to claim 1, **characterised in that** the robot (12) comprises a bridge or portal robot having a bridge (5) mounted for movement over the working area and a robot unit (12) mounted for movement along the bridge while supporting and controlling the gripping device (20).

3. A robot system according to claim 1 or 2, **characterised in that** an unloading station is positioned within the working area of the robot (12) and into which the robot (12) is able to unload a stack of goods picked from the working area.

4. A robot system according to any of the preceding claims, **characterised in that** said tower-like load receiving device comprises a vertically movable tower-like open frame (21) defining said load space, the frame being movable over the stacks of goods units for selectively delivering at least one goods unit to, or selectively picking at least one one goods unit from, a selected stack of goods units.

5. A robot system according to any of the preceding claims, **characterised in that** said gripping means comprises gripping fingers (25,26) or the like are arranged at the lower end of the gripping device (20) for establishing a hold at the lowest goods unit of a set of goods units to be lifted from a vertical stack.

6. A robot system according to any of the preceding claims, **characterised in that** the vertical load space of said tower-like load receiving device (21) is dimensioned to receive and to transport, in one operation, a greater number of goods units than is present in the highest stack of goods unit in the working area of the robot (12).

7. A method of using a robot system according to any of the preceding claims for carrying a multi-unit batch of goods units picked from at least two piles of goods units arranged in said vertical stacks within the working area, **characterised in that** the robot (12) initially picks and stores within the load space of said tower-like load receiving device at least one goods unit from a first vertical stack of goods units in an initial picking operation and subsequently, in at least one further picking operation, adds to the at least one goods unit received within the load space of the tower-like load receiving device, the or each further picking operation comprising positioning the at least one goods unit carried by the gripping device on top of the selected vertical stack of goods units, lowering the tower-like load receiving device and picking at least one additional goods unit from the selected vertical stack in addition to the at least one goods unit positioned on top of the selected vertical stack of goods units.

8. A method according to claim 7, **characterised in that** only one type of goods unit is placed in the various vertical stacks of goods units in the working area of the robot (12).

9. A method according to claim 7, **characterised in that** the said multi-unit batch of goods units has a greater number of stacked goods units than any individual stack of goods units within the working area of the robot.

10. A method according to any of the claims 7 to 9, **characterised in that** the robot (12) is controlled to move selected numbers of goods units from selected vertical stacks to another position so as to change the order of picking of goods units from selected vertical stacks.

## Patentansprüche

1. Robotersystem, das einen Roboter (12), der über eine Arbeitsfläche bewegbar ist, zum Bilden und Transportieren von mehrere Einheiten umfassenden Partien von Wareneinheiten, die in vertikalen Stapeln innerhalb der Arbeitsfläche übereinandergeschichteten Wareneinheiten entnommen werden, umfaßt, wobei der Roboter (12) eine vertikal bewegbare Greifvorrichtung (20) besitzt, die den Roboter (12) dazu befähigt, Wareneinheiten oben von ausgewählten Stapeln zu entnehmen und/oder derartige Einheiten oben auf ausgewählten Stapeln abzusetzen, **dadurch gekennzeichnet, daß** die Greifvorrichtung eine vertikal bewegbare turmähnliche Lastaufnahmevorrichtung (21), die einen Lastraum zur Aufnahme gestapelter Wareneinheiten definiert, sowie Greifmittel (22-26) am unteren Ende der Lastaufnahmevorrichtung umfaßt, wobei die Lastaufnahmevorrichtung in der vertikalen Richtung so dimensioniert ist, daß sie mehrere Wareneinheiten aufnehmen und umschließen kann, die allgemein vertikal oben auf einer von den Greifmitteln gehaltenen untersten Wareneinheit getragen werden, wodurch die Greifvorrichtung (20) durch Steuerung ihrer vertikalen Bewegungen in der Lage ist, selektiv mindestens eine Wareneinheit einem vertikalen Stapel von Wareneinheiten zu entnehmen oder selektiv mindestens eine Wareneinheit einem vertikalen Stapel von Wareneinheiten zuzuführen, so daß die Anzahl und Zusammensetzung von Wareneinheiten in einer Partie von Wareneinheiten, die vom Roboter (12) entnommen und einer Entladungsstelle zugeführt werden, gemäß einem voreingestellten Befehl frei ausgewählt und variiert werden können.

2. Robotersystem nach Anspruch 1, **dadurch gekennzeichnet, daß** der Roboter (12) einen Brückenoder Portalroboter, der eine Brücke (5) besitzt, die so montiert ist, daß sie sich über die Arbeitsfläche bewegen kann, sowie eine Robotereinheit (12) umfaßt, die so montiert ist, daß sie sich entlang der Brücke bewegen kann und dabei die Greifvorrichtung (20) abstützt und steuert.

3. Robotersystem nach Anspruch 1 oder 2, **dadurch gekennzeichnet, daß** innerhalb der Arbeitsfläche des Roboters (12) eine Entladungsstation positioniert ist, in die der Roboter (12) einen in der Arbeitsfläche entnommenen Warenstapel entladen kann.

4. Robotersystem nach einem der vorstehend aufgeführten Ansprüche, **dadurch gekennzeichnet, daß** die turmähnliche Lastaufnahmevorrichtung einen vertikal bewegbaren turmähnlichen offenen Rahmen (21) umfaßt, der den Lastraum definiert, wobei der Rahmen über die Stapel von Wareneinheiten bewegbar ist, um selektiv mindestens eine Wareneinheit einem ausgewählten Stapel von Wareneinheiten zuzuführen oder selektiv mindestens eine Wareneinheit einem ausgewählten Stapel von Wareneinheiten zu entnehmen.

5. Robotersystem nach einem der vorstehend aufgeführten Ansprüche, **dadurch gekennzeichnet, daß** die Greifmittel Greiffinger (25, 26) o. ä. umfassen, die am unteren Ende der Greifvorrichtung (20) angeordnet sind, um einen Halt an der untersten Wareneinheit eines Satzes von Wareneinheiten, die von einem vertikalen Stapel abgehoben werden sollen, sicherzustellen.

6. Robotersystem nach einem der vorstehend aufgeführten Ansprüche, **dadurch gekennzeichnet, daß** der vertikale Lastraum der turmähnlichen Lastaufnahmevorrichtung (21) so dimensioniert ist, daß in einem Arbeitsgang Wareneinheiten in einer Anzahl, die größer als die im höchsten Stapel von Wareneinheiten in der Arbeitsfläche des Roboters (12) vorhandene Anzahl ist, aufgenommen und transportiert werden können.

7. Verfahren für die Verwendung eines Robotersystems nach einem der vorstehend aufgeführten Ansprüche zum Tragen einer mehrere Einheiten umfassenden Partie von Wareneinheiten, die mindestens zwei übereinandergeschichteten Wareneinheiten, die in den vertikalen Stapeln innerhalb der Arbeitsfläche angeordnet sind, entnommen werden, **dadurch gekennzeichnet, daß** der Roboter (12) aus einem ersten vertikalen Stapel von Wareneinheiten in einem ersten Entnahmearbeitsgang mindestens eine Wareneinheit zunächst entnimmt und innerhalb des Laderaums der turmähnlichen Lastaufnahmevorrichtung lagert und anschließend in mindestens einem weiteren Entnahmearbeitsgang der innerhalb des Lastraums der turmähnlichen Lastaufnahmevorrichtung aufgenommenen mindestens einen Wareneinheit den oder jeden weiteren Entnahmearbeitsgang hinzufügt, der das Positionieren der von der Greifvorrichtung oben auf den ausgewählten Stapel von Wareneinheiten getragenen mindestens einen Wareneinheit sowie das Absenken der turmähnlichen Lastaufnahmevorrichtung und die Entnahme von mindestens einer zusätzlichen Wareneinheit aus dem ausgewählten vertikalen Stapel zusätzlich zu der oben auf dem ausgewählten vertikalen Stapel von Wareneinheiten positionierten mindestens einen Wareneinheit umfaßt.

8. Verfahren nach Anspruch 7, **dadurch gekennzeichnet, daß** lediglich ein Typ von Wareneinheit in den verschiedenen vertikalen Stapeln von Wareneinheiten in der Arbeitsfläche des Roboters (12) plaziert ist.

9. Verfahren nach Anspruch 7, **dadurch gekennzeichnet, daß** die mehrere Einheiten umfassende Partie von Wareneinheiten eine größere Anzahl von gestapelten Wareneinheiten als irgendein einzelner Stapel von Wareneinheiten innerhalb der Arbeitsfläche des Roboters aufweist.

10. Verfahren nach einem der Ansprüche 7 bis 9, **dadurch gekennzeichnet, daß** der Roboter (12) gesteuert wird, um Wareneinheiten in ausgewählter Anzahl aus ausgewählten vertikalen Stapeln in eine andere Position zu bewegen, um so die Reihenfolge der Entnahme von Wareneinheiten aus ausgewählten vertikalen Stapeln zu verändern.

## Revendications

1. Système de robot comprenant un robot (12) mobile sur une zone de travail pour la formation et la manutention de lots de plusieurs unités de marchandises pris parmi des unités de marchandises empilées entreposées en piles verticales dans la zone de travail, ledit robot (12) ayant un dispositif pinceur mobile dans le sens vertical (20) permettant au robot (12) de prendre des unités de marchandises du, et/ou de poser de telles unités sur le haut de piles sélectionnées, **caractérisé en ce que** le dispositif pinceur comprend un dispositif récepteur de charges en forme de tour, mobile dans le sens vertical (21) définissant un espace de chargement pour recevoir des unités de marchandises empilées et des moyens de pincement (22-26) à l'extrémité inférieure du dispositif récepteur de charge, le dispositif récepteur de charge étant dimensionné dans le sens vertical pour recevoir et contenir plusieurs unités de marchandise transportées en général verticalement au-dessus d'une unité de marchandise inférieure pincée par lesdits moyens de pincement, permettant de la sorte au dispositif pinceur (20), par la commande de ses mouvements verticaux, de prendre sélectivement au moins une unité de marchandise d'une, ou de poser sélectivement au moins une unité de marchandise sur, une pile verticale d'unités de marchandises de façon que le nombre et la composition des unités de marchandises d'un lot d'unités de marchandises pris et délivré par le robot (12) à un site de déchargement puissent être sélectionnés et variés librement en fonction d'une commande prédéterminée.

2. Système de robot selon la revendication 1, **caractérisé en ce que** le robot (12) comprend un robot à pont ou à portique ayant un pont (5) monté pour permettre le mouvement sur toute la zone de travail et une unité de robot (12) montée pour permettre le mouvement le long du pont en portant et en commandant simultanément le dispositif pinceur (20).

3. Système de robot selon la revendication 1 ou 2, **caractérisé en ce qu'**il comprend en outre une station de déchargement positionnée dans la zone de travail du robot (12) et dans laquelle le robot (12) est capable de décharger une pile de marchandises prise de la zone de travail.

4. Système de robot selon l'une quelconque des revendications précédentes, **caractérisé en ce que** ledit dispositif de réception de charges en forme de tour comprend un bâti ouvert en forme de tour, mobile dans le sens vertical (21) définissant ledit espace de chargement, le bâti étant mobile au-dessus des piles d'unités de marchandises pour délivrer sélectivement au moins une unité de marchandises sur une, ou prendre sélectivement au moins une unité de marchandises, d'une pile d'unités de marchandises.

5. Système de robot selon l'une quelconque des revendications précédentes, **caractérisé en ce que** ledit moyen de pincement comprend des doigts pinceurs (25, 26) ou similaires disposés à l'extrémité inférieure du dispositif pinceur (20) pour saisir l'unité de marchandises la plus basse d'un ensemble d'unités de marchandises devant être soulevées d'une pile verticale.

6. Système de robot selon l'une quelconque des revendications précédentes, **caractérisé en ce que** ledit espace de chargement vertical dudit dispositif récepteur de charges en forme de tour (21) est dimensionné pour recevoir et transporter, en une opération, un plus grand nombre d'unités de marchandises qu'il n'en existe dans la plus haute pile d'unités de marchandises entreposée dans la zone de travail du robot (12).

7. Procédé d'utilisation d'un système de robot selon l'une quelconque des revendications précédentes pour transporter un lot de plusieurs unités de marchandises pris d'au moins deux piles d'unités de marchandises disposées dans lesdites piles verticales entreposées dans la zone de travail, **caractérisé en ce que** le robot (12) prend initialement et pose dans l'espace de chargement dudit dispositif récepteur de charges en forme de tour au moins une unité de marchandises d'une. première pile verticale d'unités de marchandises en une opération initiale de prise et ensuite, en au moins une autre opération de prise, ajoute à au moins une unité de marchandises reçue dans l'espace de chargement dudit dispositif récepteur de charges en forme de tour, l'opération ou chaque autre opération ultérieure de prise comprenant le positionnement d'au moins une unité de marchandise transportée par le dispositif pinceur sur le haut de la pile verticale d'unités de marchandises sélectionnée, l'abaissement du dispositif récepteur de charges en forme de tour et la prise d'au moins une unité supplémentaire de marchandises de la pile verticale sélectionnée en plus d'au moins une unité de marchandises positionnée en haut de la pile verticale d'unités de marchandises sélectionnée.

8. Procédé selon la revendication 7, **caractérisé en ce que** seulement un type d'unités de marchandises est placé dans les diverses piles verticales d'unités de marchandises entreposées dans la zone de travail du robot (12).

9. Procédé selon la revendication 7, **caractérisé en ce que** ledit lot de plusieurs unités de marchandises a un plus grand nombre d'unités de marchandises empilées que n'importe quelle pile individuelle d'unités de marchandises entreposées dans la zone de travail du robot.

10. Procédé selon l'une quelconque des revendications 7 à 9, **caractérisé en ce que** le robot (12) est commandé pour déplacer des nombres sélectionnés de marchandises des piles verticales sélectionnées à une autre position de manière à changer l'ordre de prise des unités de marchandises des piles verticales sélectionnées.
